**Europäisches Patentamt**

**European Patent Office**

**Office européen des brevets**

(19)

(11) Publication number : **0 420 279 B1**

(12) **EUROPEAN PATENT SPECIFICATION**

(45) Date of publication of patent specification :
12.07.95 Bulletin 95/28

(51) Int. Cl.⁶ : **G11B 7/24**

(21) Application number : **90118709.6**

(22) Date of filing : **28.09.90**

(54) **Optical information recording medium.**

Divisional application 94113081.7 filed on 28/09/90.

(30) Priority : **29.09.89 JP 252362/89**
**29.09.89 JP 252361/89**

(43) Date of publication of application :
**03.04.91 Bulletin 91/14**

(45) Publication of the grant of the patent :
**12.07.95 Bulletin 95/28**

(84) Designated Contracting States :
**DE FR GB**

(56) References cited :
**EP-A- 0 175 905**
**EP-A- 0 293 769**
**EP-A- 0 327 951**

(73) Proprietor : **SONY CORPORATION**
**7-35, Kitashinagawa 6-chome,**
**Chiyoda-ku**
**Tokyo (JP)**

Proprietor : **MITSUBISHI GAS CHEMICAL COMPANY, INC.**
**5-2, Marunouchi 2-chome**
**Chiyoda-Ku**
**Tokyo, 100 (JP)**

(72) Inventor : **Kudo, Junichiro**
**c/o Sony Magnetic Products Inc.,**
**5-6 Kitashinagawa**
**6-chome, Shinagawa-ku, Tokyo (JP)**
Inventor : **Kohno, Katsumi**
**c/o Sony Magnetic Products Inc.,**
**5-6 Kitashinagawa**
**6-chome, Shinagawa-ku, Tokyo (JP)**
Inventor : **Umemura, Toshikazu**
**c/o Mitsubishi Gas Chem.Co.Inc.,**
**5-2, Marunouchi**
**2-chome, Chiyoda-ku, Tokyo 100 (JP)**
Inventor : **Matsumura, Makoto**
**c/o Mitsubishi Gas Chem.Co.Inc.,**
**5-2, Marunouchi**
**2-chome, Chiyoda-ku, Tokyo 100 (JP)**

(74) Representative : **TER MEER - MÜLLER - STEINMEISTER & PARTNER**
**Mauerkircherstrasse 45**
**D-81679 München (DE)**

## Description

## BACKGROUND OF THE INVENTION

Field of The Invention

This invention relates to optical information recording mediums such as magneto-optic disks, various write-once optical disks, and digital audio disks or so-called compact disks. More particularly, the invention relates to an improved optical information recording medium wherein an injection molded piece of a polycarbonate resin is used as a substrate for the medium.

Description of The Prior Art

In optical information recording mediums wherein information is recorded and reproduced by irradiation of a laser beam, such as magneto-optic disks, various write-once optical disks, erasable optical disks and digital audio disks, typically a polycarbonate resin injection molded article or piece is used as the substrate. Injection molded pieces of polycarbonate resins provide a number of advantages. They have a good heat resistance, are easily subsequently molded, suffer less deformation and undergo little change in quality after the molding process, and have good mechanical characteristics such as impact resistance. Further, compared to glass substrates, the polycarbonate resin pieces are more conducive to mass-production and are thus less expensive.

Frequently metal-based recording materials are used as the information recording layer of the optical information recording mediums; typical the recording layer is a rare earth element-transition metal amorphous alloy film as used in magneto-optic disks. Accordingly, a major problem that is encountered in practical applications is how to increase the resistance of the metal layer to corrosion.

In view of the above, optical information recording mediums based on substrates of injection molded polycarbonate resin have not always performed satisfactory with respect to the long-term reliability of the information recording medium. For instance, when stored at high temperatures and high humidity, the recording film or reflection film often corrodes. Corrosion brings about a failure in reproduction due to the increase in error rate, presenting a great obstacle in guaranteeing reliability.

Where polycarbonate resins are injection molded and used as a substrate, the usual practice is to add releasing agents. Releasing agents are necessary to ensure that the product's resistance to being released from the mold is not great or the resultant pieces will suffer warpage or optical strain.

Known releasing agents used for polycarbonate resins include paraffin, silicone oils, fatty acid esters, partial esters of fatty acids (especially, fatty acid monoglycerides) and the like. Some release agents exhibit a good releasing effect when added in small amounts, on the other hand, some do not provide a satisfactory effect unless added in large quantities. Silicone oils which must be used in large amounts will impede the adhesion of the film and some may cause the film to be corroded.

Typical agents which exhibit a good releasing effect only in small amounts include fatty acid monoglycerides. However, preservation tests conducted at high temperatures and humidity demonstrate that fatty acid monoglycerides cause a hydrolysis of the polycarbonate resins. When polycarbonate resins are hydrolyzed. the hydrolyzates are deposited as fine white spots in the final moldings, thereby causing the dispersion of a laser beam (local anomaly of birefringence), the lowering in adhesion of films, and the deterioration in strength of the substrate.

EP-A-0 293 769 discloses a polycarbonate useful for the manufacture of an optical information recording medium having a methylene chloride content of not more than 20 ppm.

## SUMMARY OF THE INVENTION

It is accordingly an object of the invention to provide an optical information recording medium that includes a substrate made of an improved polycarbonate resin injection molded piece that reduces the occurrence of corrosion in the medium improving the error rate.

It is another object of the invention to provide an optical information recording medium that utilizes an improved substrate ensuring long-term reliability.

The inventors have made intensive studies over a long term in order to elucidate the factors that cause corrosion to occur in optical information recording medium using, as a substrate, injection molded pieces of polycarbonate resins. As a result, the inventors have found that the corrosion in the medium occurs deeply in the free chlorine present in the substrate and that the chloroformate group present at the terminal ends of the polycarbonate resin and halogenated hydrocarbon used as a solvent for polymerization were factors in the lowering of the reliability of the product. The present invention is based, in part, on the above findings.

In accordance with the invention, there is provided an optical information recording medium of the type which comprises a substrate and a recording layer formed on the substrate and capable of recording, reproducing or erasing information by optical irradiation, the substrate comprising an injection molded piece of a polycarbonate resin that is prepared from an aromatic bisphenol and phosgene and the amount of chlorine present as a chloroformate group at terminal ends of the polycarbonate is not greater than 2.0 ppm, the substrate includes a content of free chlorine of less than or equal to 0.2 ppm and a content of halogenated hydrocarbons of less than or equal to 10 ppm.

## BRIEF DESCRIPTION OF THE DRAWINGS

Fig. 1 graphically represents the amount of free chlorine in the substrate derived from chloroformate groups at terminal ends of a polycarbonate resin versus preservation time;

Fig. 2 graphically represents the amount of free chlorine derived from a halogenated hydrocarbon present in the substrate versus preservation time;

Fig. 3 graphically represents the error rate caused by free chlorine in the substrate versus preservation time;

Fig. 4 graphically represents the error rate of magneto-optic disks fabricated in the examples versus preservation time;

Fig. 5 schematically illustrates an example of an injection molding machine;

Figs. 6 to 8 are, respectively, are schematic sectional views illustrating the injection molding steps in the successive order wherein Fig. 6 illustrates a step of closing the mold, Fig. 7 illustrates the step of filling the mold with a resin melt, and Fig. 8 illustrates a step of clamping the mold.

## DETAILED DESCRIPTION AND PREFERRED EMBODIMENTS OF THE INVENTION

The polycarbonate resins used as a substrate material in the optical information recording medium of the invention are those that are prepared by an interfacial polymerization process wherein aromatic bisphenols such as, for example, bisphenol A and phosgene, are reacted in the presence of an acid binding agent such as, for example, an alkali, e.g. sodium hydroxide, in a solvent including a halogenated hydrocarbon such as methylene chloride, chloroform, carbon tetrachloride, dichloroethane, and trichloromethane.

Examples of the polycarbonate resins include, aside from ordinary polycarbonate resins, branched polycarbonate resins using trifunctional or polyfunctional organic compounds having a phenolic hydroxyl group as a branching agent, long chain alkyl-terminated polycarbonate resins using as an end terminating agent a monofunctional organic compound such as a long chain alkyl chloride or long chain alkyl-substituted phenol, long chain terminated, alkyl-branched polycarbonate resins using the above-mentioned branching agents and end terminators, graft polymers obtained by graft-polymerizing styrene to modified polycarbonate resins obtained by using bisphenols having an unsaturated double bond and vinyl phenol, graft polymers of polycarbonate resins with modified styrene having a phenolic hydroxyl group, and mixtures thereof. The polycarbonate resins used have a viscosity-average molecular weight of 13,000 to 30,000.

These polycarbonate resins are charged into an injection molding machine in the form of pellets and melted by means of a heater. This is followed by extrusion into a mold to form a substrate piece. Pursuant to the present invention the free chloride in the substrate molded piece obtained by the injection molding should be not greater than 0.2 ppm. When the free chlorine exceeds 0.2 ppm of the content, the error rate increases significantly due to the occurrence of corrosion.

In order to ensure that the content of free chlorine present in the substrate is not greater than 0.2 pp, the polycarbonate resin should be purified to a satisfactory extent. For instance, the polymer solution obtained by the interfacial polymerization process is repeatedly washed with water to remove impurities including electrolytic substances such as salts, alkalis and the like, thereby completely eliminating the impurities therefrom.

Further, the polycarbonate resin solution purified by washing should be separated from the washings by a combination of centrifugal separation and filtration. Through this process the content of free chlorine left in the substrate can be substantially reduced. For instance, in an embodiment, after separation of the alkaline aqueous solution from the resin solution obtained after the polymerization reaction, at least three steps of washing are performed for neutralization and purification: washing with water; washing with a phosphoric acid aqueous solution; and washing with water.

The separation of phases after the washing step, in the respective steps, should be effected at a centrifugal force of not less than 500 G. A final washing step with water is continued until the centrifugally separated water has a conductivity of not greater than 10 μs/cm, preferably not greater than 9 μs/cm. At the same time,

EP 0 420 279 B1

the water content in the resin solution is set at a level of not greater than 0.5%.

The resin solution is passed through a 0.5 to 10 μm mesh filter. Part of the water in the resin solution condenses on the filter, permitting droplets with a diameter of not smaller than 1 mm to be separated from the resin solution until the water content in the resin is not greater than 0.2%, preferably not greater than 0.15%.

On the other hand, the polycarbonate resins contain a substantial amount of chloroformate groups and have an appreciable amount of a halogenated hydrocarbon that is used as the solvent for polymerization. For instance, polycarbonate resins prepared by the interfacial polymerization process contain present as chloroformate groups, from approximately from 3 to 10 ppm of chlorine and several hundreds ppm of halogenated hydrocarbon.

Pursuant to the present invention, the amount of free chlorine remaining in the substrate should not be greater than 0.2 ppm according to the procedure set forth above. The content of chlorine present as a chloroformate group at the terminal ends of the molecule of the polycarbonate resin should not be greater than 2.0 ppm. Moreover, the content of the halogenated hydrocarbon present in the substrate should not be greater than 10 ppm.

Because the chloroformate group and the halogenated hydrocarbon decompose to produce free chlorine as the substrate ages, they cause the error rate to increase due to the occurrence of corrosion. More particularly, when the content of the chloride existing as chloroformate groups at the terminal ends of the molecule chain of the polycarbonate resin exceeds 2.0 ppm, or the content of the halogenated hydrocarbon present in the substrate exceeds 10 ppm, the free chlorine increases. This results in an abrupt increase of an error rate.

Accordingly, it is necessary to reduce the chloroformate group of the polycarbonate resin or the halogenated hydrocarbon in the substrate. To reduce the amount of chloroformate groups in the polycarbonate resin, it is sufficient to increase the degree of polymerization of the polycarbonate resin or remove low molecular weight components from the resin.

In order to remove the low molecular weight components, the resin solution obtained after the polymerization is agitated while forming an emulsion with a 1 to 10 wt% sodium hydroxide solution, by which chloroformate and other reaction intermediates and terminal groups, provided as side products, are decomposed. Simultaneously, a part of the unreacted bisphenol and low molecular weight products are extracted. Thereafter, the resin solution is repeatedly washed with water and then with an aqueous solution of a mineral acid such as phosphoric acid to purify the solution. The thereby purified solution is subjected to a fine filtration to remove "dust" therefrom. The removed resin solution is placed in a non-solvent, or poor solvent, for polycarbonate (or the non-solvent or poor solvent is placed in the resin solution) to precipitate the resin. Through this method, low molecular weight products are efficiently separated.

Alternatively, the reaction solution obtained in the polymerization step can be treated with an aqueous ammonia solution or an aqueous solution of ammonia and an alkali, to reduce the chloroformate groups at the terminal ends. When ammonia reacts with the terminal chloroformate groups of the polycarbonate resin, the reaction readily proceeds to form an aminoformate group. The aminoformate group is hydrolyzed at a pH of not less than 11 into an OH group. The reaction proceeds according to the following formula (1):

$$R\text{-}OCOC1 + NH_3 + H_2O \rightarrow R\text{-}OH + CO_2 + NH_4Cl \qquad (1)$$

Moreover, in order to limit the amount of halogenated hydrocarbon left in the substrate, a non-solvent, or poor solvent, for the polycarbonate resin is added to the polycarbonate resin solution in an amount that will not cause precipitation. The resultant uniform solution is maintained at a temperature of 45 to 100°C and dropped into or sprayed in water under agitation for gelation. The solvent is distilled off to provide a porous particulate product, followed by separation of water, drying, and drying through extrusion. Examples of a non-solvent, or poor solvent, for the polycarbonate resin include n-heptane, cyclohexane, benzene, toluene, and the like; n-heptane is preferred.

Because the content of free chlorine present in the substrate is defined as well as the content of chlorine existing as chloroformate groups at the terminal ends of the molecule chain of the polycarbonate and the upper limit for the amount of the halogenated hydrocarbon present in the substrate, the effect of the free chlorine can be suppressed after preservation over a long term. This can, in turn, suppresses an error rate due to corrosion.

Releasing agents are added to the polycarbonate resins to increase their releasability from the mold. The releasing agents used in the present invention preferably consist of primarily fatty acid esters having no alcoholic hydroxyl group. By fatty acid esters having no alcoholic hydroxyl group what is meant are the esters obtained by reaction between alcoholic hydroxyl groups and fatty acids in equimolar amounts (nominal amounts) or a reaction wherein an excess amount of fatty acids are used, i.e., esters having only a very small amount of unreacted or remaining alcohol. Alternatively, naturally occurring ester waxes such as plants, animals, insects, and minerals can be used. Pursuant to the present invention, the releasing agent preferably has a hydroxyl value of not greater than 5 mg of KOH/g. When the hydroxyl value exceeds 5 mg of KOH/g, the hydrolysis

4

of the polycarbonate is facilitated, increasing defects in the substrate.

Specific examples of the esters that can be used as releasing agents include synthetic esters such as butyl stearate, stearyl stearate, behenyl behenate, methyl laureate, isopropyl palmitate, 2-ethylhexyl stearate, pentaerythritol tetrabehenate and the like, and beeswax mainly composed of long chain fatty acid esters having a high purity of the esters.

Preferably, the content of releasing agent used preferably is in the range of from 0.005 to 0.5 parts by weight per 100 parts by weight of the polycarbonate resin. If the amount is less than the above range, it is difficult to maintain good releasing characteristics, resulting in the possibility that the resultant substrate will warp or suffer optical strain. On the other hand, if the releasing agent is used in greater amounts, this can result in disadvantages such as poor adhesion to the information recording layer.

Preferably, the polycarbonate resin used for the injection molding should not contain phosphorus compound such as a phosphite as a thermal stabilizer. In this regard, it should be noted that the term "polycarbonate not containing a thermal stabilizer" means that such a thermal stabilizer is not intentionally incorporated in the compound for the purpose of preventing thermal decomposition of the polycarbonate resin. Accordingly, for example, a trace amount of phosphorus compound can be contained, or small amounts (e.g. about 5 ppm) of thermal stabilizers can be contained for some other reasons within the polycarbonate resin not containing a thermal stabilizer of the present invention, and therefore such compounds should fall within the scope of that term.

The polycarbonate resin is charged into an injection molding machine in the form of pellets. The pellets are melted by means of a heater and extruded into a mold to form a substrate piece. The resin temperature should preferably be kept as low as possible, provided that uniform kneading is possible, and should preferably be not greater than 326°C. If the resin temperature is too high, decomposition of the terminal chloroformate groups of the polycarbonate resin and the halogenated hydrocarbon remaining in the resin is facilitated, with the possibility that the amount of free chlorine present in the substrate will increase. In addition, at higher temperatures the fatty acid ester contained as the releasing agent decomposes not only facilitating hydrolysis of the polycarbonate resin, but also thermally decomposing the resin thereby increasing contaminations therein. If, however, the resin temperature is too low, there is the possibility that optical characteristics such as birefrigence of the substrate will suffer. Accordingly, the lower limit is generally set at approximately 280°C.

When the releasing agent consists primarily of fatty acid esters (full esters) free of any alcoholic hydroxyl group and having a hydroxyl value of not greater than 5 mg of KOH/g and the resin temperature during the injection molding is not greater than 326°C, the hydrolysis of the polycarbonate resin can be limited.

A resin temperature of not greater than 326°C during the injection molding prevents contamination due to the thermal decomposition of the resin and the need for thermal stabilizers, with an attendant advantage from the standpoint of reduced corrosion of the recording layer.

By way of example and not limitation, examples of the present invention will now be given.

Example 1

How the content of free chlorine in a substrate is modified depending on the content of chloride present as chloroformate groups at terminal ends of the molecule chain of polycarbonate resins was determined.

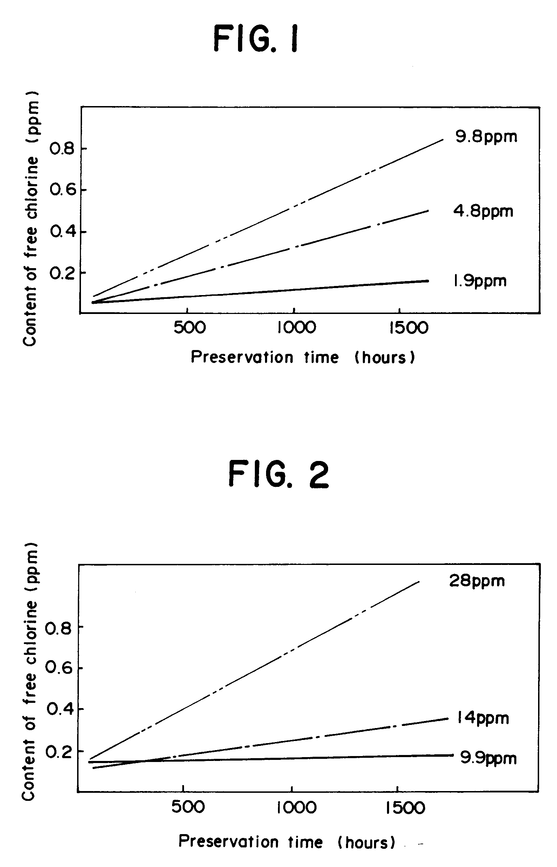

First, polycarbonate resins having chlorine contents of 1.9 ppm, 4.8 ppm, and 9.8 ppm present as the terminal chloroformate group (provided that the amount of a remaining halogenated hydrocarbon was constant) were subjected to injection molding to form substrate pieces. The respective pieces were allowed to stand in an environment having a temperature of 85°C and a relative humidity of 90% to measure the variation in the content of free chlorine versus time. The results are illustrated in Fig. 1.

The chlorine present as the terminal chloroformate of the polycarbonate resin was measured according to the following procedure.

5 g of a sample was accurately weighed and dissolved in 150 ml of methylene chloride, to which 0.2 ml of pyridine and 5 ml of ethanol were added, followed by decomposition of the terminal chloroformate group at 40°C under agitation. The free chlorine ions produced as a result of the decomposition were extracted with 55 ml of pure water, followed by quantitative determination of the chlorine ions by ion chromatography using a 1.0 mM sodium hydrogencarbonate aqueous solution as an eluate. By subtracting the concentration of chlorine ions determined at the time when extracted from the methylene chloride solution without the procedure of decomposition of the terminal chloroformate group, the concentration of chlorine from the terminal chloroformate was obtained.

The free chlorine in the substrate was determined as follows. 5 g of a sample was cut off from the substrate and accurately weighed. The sample was dissolved in 100 ml of 1,4-dioxane. 20 ml of the solution was placed in 80 ml of pure water, after which the resultant polymer was removed by filtration, and the filtrate was analyzed by ion chromatography. The ion chromatograph used was Model 2000i, made by Dionex Co., Ltd., and the eluate used was a 1 mM sodium hydrogencarbonate aqueous solution.

Referring to Fig. 1, it will be seen that the amount of free chlorine in the substrate increases with an increasing content of chlorine present as the terminal chloroformate group of the polycarbonate resin. However, when the amount of chlorine present as the terminal chloroformate group is limited to a level of not greater than 2.0 ppm, the content of free chlorine in the substrate after preservation over 1500 hours can be limited to 0.2 ppm or below.

Example 2

How the amount of free chlorine in a substrate changes in relation to the amount of a halogenated hydrocarbon present polycarbonate resins was determined.

First, under the same conditions as for the case of the terminal chloroformate group, the differences were checked with respect to substrates having amounts of the remaining halogenated hydrocarbon (methylene chloride was used in this example) of 9.9 ppm, 14 ppm, and 28 ppm (wherein the amount of chlorine present as the terminal chloroformate group was held constant). The results are illustrated in Fig. 2.

It will be noted that the amount of the halogenated hydrocarbon present in the substrate was determined by dissolving each sample in 1,4-dioxane and subjecting the sample to quantitative determination by gas chromatography (detector was ECD).

As a result, it was determined that as the content of the halogenated hydrocarbon present in the substrate increased, the increase in the amount of free chlorine in the substrate in relation to time became significant. In order to limit the content of the free chlorine to a level of not greater than 0.2 ppm, it was necessary that the content of remaining halogenated hydrocarbon be not greater than 10 ppm.

Example 3

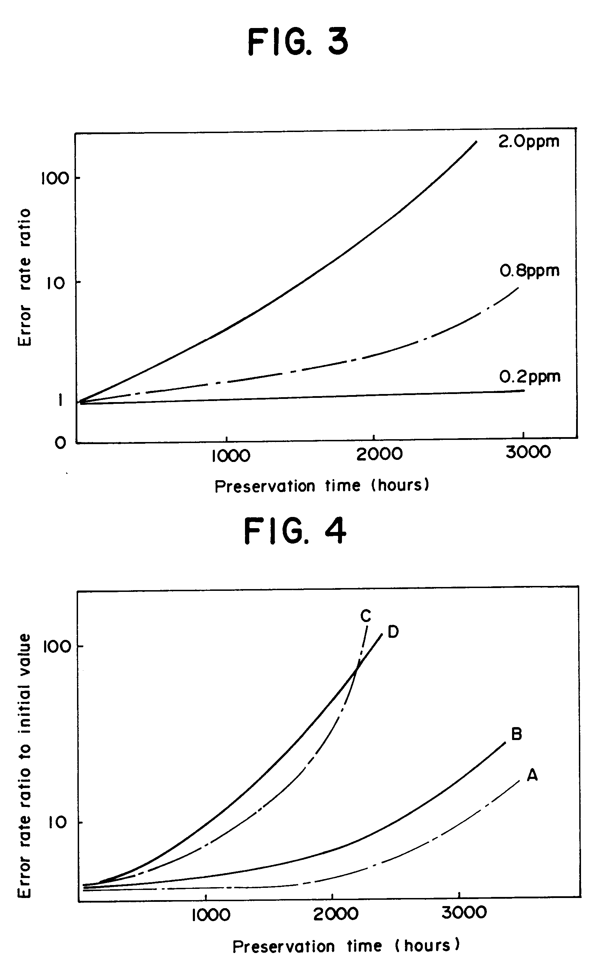

In this example, the variation in error rate relative to the preservation time with respect to the content of free chlorine in the substrate was determined. Substrates having contents of free chlorine of 0.2 ppm, 0.8 ppm, and 2.0 ppm were allowed to place in an environment of having a temperature of 80°C and a relative humidity of 85%. The results are illustrated in Fig. 3.

When the content of free chlorine was 0.2 ppm, the error rate barely increased. In contrast, when the content of free chlorine was 0.8 ppm or 2.0 ppm, the error rate significantly increased with time.

Example 4

300 kg of bisphenol A, 1,400 liters of a 10% sodium hydroxide solution, 650 liters of methylene chloride and 0.5 kg of hydrosulfite were charged into a reaction vessel having a capacity of 5 m³ and agitated. To the reaction mixture was further charged 12.3 kg of p-tert-butylphenol, followed by blowing in 147 kg of phosgene in approximately 45 minutes.

After completion of the blowing of phosgene, 0.2 kg of triethylamine was added, this was followed by a polymerization for 60 minutes under violent agitation while maintaining a temperature of 30°C.

After the agitation was stopped, 0.2 kg of ammonia and 80 liters of a 10% sodium hydroxide solution were added. This was followed by further reaction under violent agitation for 60 minutes.

After completion of the polymerization, the reaction solution was passed into a continuous centrifugal separator and an aqueous phase was separated at a centrifugal force of 5,000 G. The resin solution was then passed into an agitation vessel, to which 300 liters of pure water was added and agitated. After completion of the agitation, the resultant aqueous phase was centrifugally separated in the same manner as described above. The resultant resin solution was fed into a phosphoric acid neutralization vessel, to which 300 liters of a 1% phosphoric acid aqueous solution was added and agitated. After completion of the agitation, the phosphoric acid aqueous phase was centrifugally separated in the same manner as described above.

Subsequently, the separated resin solution was fed into a final-stage washing vessel. 300 liters of pure water was added to the vessel, followed by agitation and centrifugal separation.

The resultant resin solution was subjected to filtration through a membrane filter of polyperfluoroethylene having a pore size of 1.2 μm.

200 liters of n-heptane per 1,000 liters of the resin solution were mixed and placed into water under violent agitation at a temperature of 55°C and ambient pressure. After the solution was added to the water, the temperature was raised to at least 95°C and the solvent was distilled off. An aqueous slurry of the polycarbonate resin was filtered to collect a resin powder. The powder was pulverized so as to provide an average particle size of 1 to 1.5 mm and was dried at 140°C for 3 hours.

The content of chlorine present as the terminal chloroformate group in the dried powder was 1.6 ppm.

The resultant polycarbonate powder was mixed with an additive, followed by extrusion at 270°C using a vented extruder to obtain pellets. The pellets were injection molded to obtain a 1.2 mm thick optical disk substrate.

The above procedure was repeated using different procedures thereby obtaining the substrates set forth Table 1 below.

Table 1

| | Pellets | Substrate | |
|---|---|---|---|
| | chlorine present chloroformate group | halogenated hydrocarbon | free chlorine |
| Substrate A | 1.6 ppm | 6 ppm | 0.1 ppm |
| Substrate B | 2.9 ppm | 15 ppm | 0.5 ppm |
| Substrate C | 0.5 ppm | 47 ppm | 0.3 ppm |
| Substrate D | 2.0 ppm | 33 ppm | 0.4 ppm |

Substrates A to D were each formed with a 50 nm (500 angstrom) thick dielectric film, a 80 nm (800 angstrom) thick TbFeCo film (serving as a recording layer), and a 5 μm thick UV-cured resin layer, in this order, thereby obtaining a magneto-optic disk.

The thus obtained magneto-optic disks were evaluated with respect to error rate. The evaluation was made as follows. Each disk was preserved under the following conditions: a temperature of 70°C and a relative humidity of 85%. The increase of the error rate with respect to the time was expressed as a ratio to an initial error rate. The results are illustrated in Fig. 4.

In Figure 4, curve A represents a magneto-optic disk using the substrate A, curve B represents substrate B, curve C represents substrate C, and curve D represents substrate D.

Fig. 4 demonstrates that substrate A, according to the present invention, exhibits little increase in the error rate after preservation of over 2000 hours with a good corrosion resistance.

In contrast, the increase of the error rate was significant for substrate B wherein the content of chlorine as the terminal chloroformate group was great and for the substrates C and D wherein the contents of the remaining halogenated hydrocarbon were great.

Example 5

Injection Molding

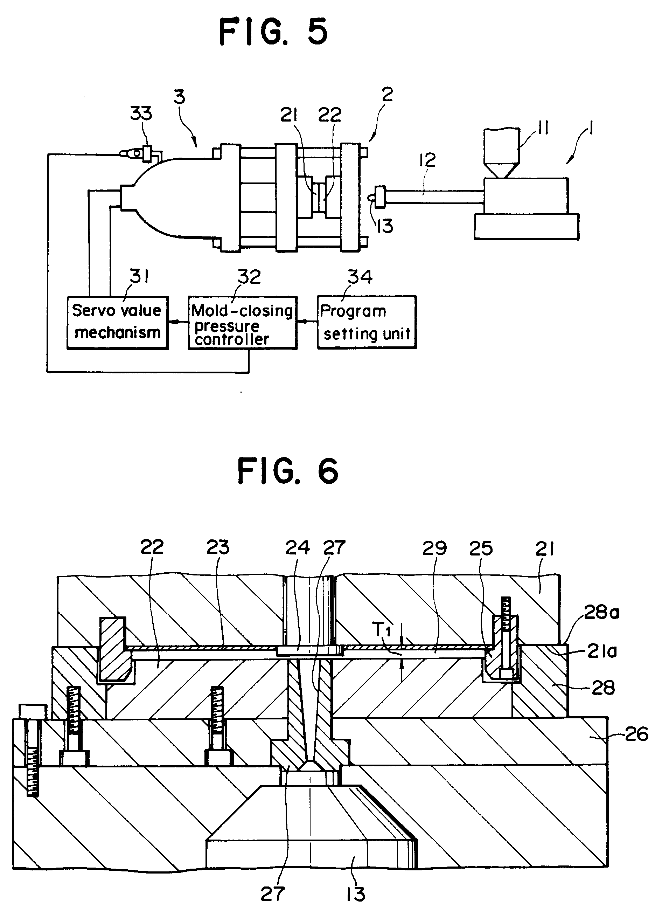

The injection molding machine used in this example will be initially described. The injection molding machine is comprised, as illustrated in Fig. 5, of a resin injection unit 1 for supplying a polycarbonate resin melt into a mold, a mold unit 2 having a cavity corresponding to the shape of an optical disk substrate, and a mechanism 3 for closing the mold that applies a pressure to the mold unit 2.

The resin injection unit 1 includes a hopper 11 into which resin pellets are charged, a heating cylinder 12 having a heater therearound and a screw in the inside thereof, and a nozzle 13. The resin pellets are fed from the hopper 11 and successively melted. The resin melt is extended from the tip of the nozzle 13.

The mold unit 2 includes as illustrated in Fig. 6, a movable portion 21 and a side cavity portion 22. The movable portion 21 includes a stamper 23 which is fixed with an inner margin holder 24 for the stamper and an outer margin holder 35 for the stamper. The side cavity portion 22 is fixed by a fixing plate 26 and is provided at the center thereof with a resin injection port 27. The resin injection port 27 is connected to the nozzle 13 of the resin injection unit 1 and includes an opening 27a at the tip thereof.

At the periphery of the side cavity portion 22 is provided a mold holder 28 that is fixed to a fixing plate 26.

The movable portion 21 contacts at an outer margin thereof a top face 28a of the mold holder 28 to close the mold wherein a cavity 29 having a desired shape is created between the mold parts 21 and 22.

The mold unit 2 is provided with a mechanism for closing the mold 3 that is capable of moving the movable part 21 in longitudinal directions. The mechanism 3 for closing the mold used in this example is a so-called booster ram-type closing mechanism. The booster ram-type closing mechanism is one wherein a booster ram having a smaller diameter than a main ram is inserted coaxially with the central axis of the main ram so that the main ram can be moved at a high speed. The booster ram-type mechanism has been widely used in mid-sized injection molding machines.

The mechanism 3 for closing the mold is coupled to a servo valve mechanism 31 and is controlled using a controller 32 that controls the closing pressure. The pressure controller 32 is connected to the mechanism 3 through a pressure sensor 33. By operating the mechanism 3 for closing the mold, the pressure applied to the movable portion 21 is detected using a pressure sensor 33 and the closing pressure controller 32 is controlled by the detected signal thereby controlling the servo valve mechanism 31.

The mold-closing pressure controller 32 is also coupled to a programmable unit 34 in which the application of pressure and timing for the movable portion 21 can be programmed. An output signal from the programmable unit 34 is applied to the mold-closing controller 32 to operate the servo valve mechanism 31 thereby controlling the oil pressure and operation time of the mechanism 3 for closing the mold. By this control, the closing pressure of the movable part 21 is controlled during the course of the injection of the resin melt into the cavity 29 between the movable part 21 and the cavity side part 22 or after completion of the injection step. Variations of the mold-closing pressure should preferably be controlled digitally and the response speed should preferably be high (e.g. the de-compression of from 13.72 to 0 MPa (140 kg/cm$^2$ to 0 kg/cm$^2$) should preferably be completed within 0.5 seconds).

The mechanism 3 for closing the mold is not limited to the afore-stated booster ram-type closing mechanism, but, a toggle-type mechanism can also, if desired, be utilized. With a toggle-type mold-closing mechanism, a mold-closing cylinder force is enlarged by a link mechanism called a toggle, a great mold-closing force can be obtained with the mechanism. This type of mechanism ensures a great mold-closing pressure, utilizing a small-size cylinder and a high speed mold-closing operation. The molding procedure for molding an optical disk substrate from polycarbonate resins by the use of the injection molding machine of the type stated above is described.

In this example, for the fabrication of an optical disk substrate, the outer margin 21a of the movable part 21 is contacted with the top face 28a of the mold holder 28, that is provided at an outer periphery of the cavity side part 22, to close the mold as illustrated in Fig. 6. In this position, the polycarbonate resin melted in the resin injection unit 1 is injected into the cavity 29 from the resin injection port 27 through the nozzle 13.

The mold temperature is not critical and should preferably not be greater than the thermal deformation temperature of an optical disk substrate in view of skew characteristics. Preferably, the mold temperature is generally in the range of from 50 to 120°C.

As the injection procedure continues, the resin melt fills the cavity 29. In this example, the filling pressure is set so that it is slightly greater than the mold-closing pressure which is applied to the movable part 21.

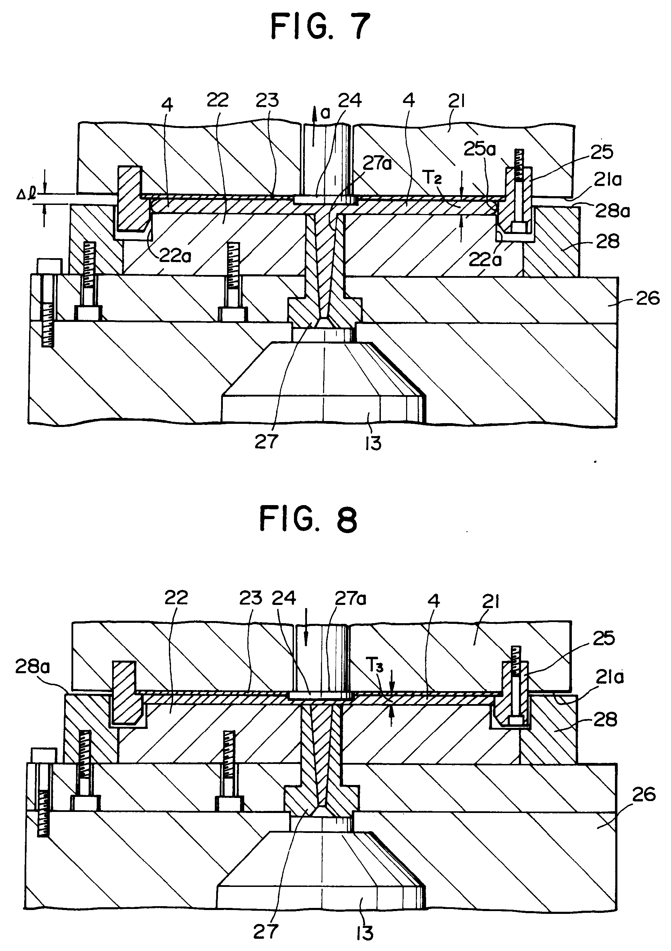

Accordingly, when the resin melt 4 is injected into the cavity 29 of the mold unit 2 in the closed position, the movable part 21 is retracted toward the arrow a, as illustrated in Fig. 7, by $\Delta \ell$ by the action of the filling pressure, so that the distance between the parts 21 and 22 is forced to increase from $T_1$ of Fig. 6 to $T_2$ of Fig. 7.

In this manner, when the filling pressure is set slightly greater than the mold-closing pressure applied to the movable part 21 and the distance or gap between both parts 21 and 22 can be varied, the pressure within the cavity 29 is made uniform by variation of the gap. This ensures that the resin melt 4 is fully packed throughout the cavity 29, thus leading to the creation of an optical disk substrate that has a high dimensional accuracy.

Because the movable part and the side cavity portion are opened by the filling pressure, the pressure within the cavity 29 cannot be extremely high, with advantages that an unnecessary strain is exerted on the resin melt 4, which is favorable in improving the birefrigence. In this regard, however, if the pressure for closing the mold, applied to the movable part, is too small, transferability may be insufficient. Taking the above into consideration, the mold-closing pressure should preferably be set appropriately.

When the mold parts 21 and 22 are caused to open by the application of the filling pressure, the resin melt 4 enters into the small gap between the parts 21 and 22. This creates the possibility of causing a so-called burr to occur. In the illustrated apparatus, the inner peripheral face 25a of a ring-shaped outer peripheral stamper holder 25, provided at the movable part 21, corresponding to the outer margin of the disk substrate and an outer peripheral face 22a of a stepped portion, corresponding to the diameter of the disk substrate of the cavity side part 22, are provided so that they cross in the direction substantially intersecting with the substrate surface. Utilizing this construction the likelihood of the occurrence of a burr is reduced.

When the filling of the cavity with the resin melt 4 is completed, a uniform pressure is applied to over the entire surface of the resin 4. This pressure is due to the mold-closing pressure of the movable part that is maintained. When cooled, the parts 21 and 22 are closed by shrinkage of the resin as illustrated in Fig. 8.

As a result, the resin melt 4 within the cavity 29 is formed into a disk substrate having a given thickness $T_3$ and pits or pre-grooves preliminarily formed in the stamper 23 are transferred. At this stage, the resin 4 is not fully solidified wherein the outer peripheral portion becomes solidified as a skin layer but the inside remains fluidized as a core layer.

At this time, or before the resin is not completely solidified, the mold-closing pressure applied to the movable part 21 is abruptly released, or decompressed to zero or a very low pressure. To achieve the abrupt release of the mold-closing pressure, when, for example, the booster ram-type closing mechanism is utilized, the servo valve mechanism 31 is operated through the mold-closing controller 32 so that the oil in the cylinder chambers of the main ram and the booster ram is abruptly discharged. Similarly, utilizing the toggle-type mold-closing mechanism, the pressure within mold-closing cylinder is released, thereby releasing the mold-closing pressure in the link mechanism. Alternatives utilizing a general-purpose injection molding machine, a pressure valve can be released to abruptly release the applied pressure. The abrupt release of the mold-closing pressure is very effective in controlling the birefrigence.

In this manner, the closing pressure of the movable part 21 is released at a given time to control an initial value of birefrigence, after which the resin is completely solidified while maintaining its state. At this stage, the mold parts 21 and 22 are maintained in a state so that they contact the resin 4 and the closing pressure alone is released.

Finally, the mold parts 21 and 22 are opened allowing the removal of the molded optical disk substrate.

The resultant optical disk substrate cannot be used as is. As time passes, the birefrigence gradually approaches zero, whereupon when the substrate is annealed and the birefrigence is stabilized near zero. The annealing temperature is in the range of approximately 70 to 120°C.

The above procedure is performed while separating a transfer zone and it birefrigence control zone during the molding process. Accordingly, these operations can be independently controlled, making it possible to form an optical disk substrate which satisfies the requirements including the birefrigence and the transfer characteristics, which are contrary to each other.

Although the present invention is described based on the experimental results, the invention is applicable of all the types of optical information recording mediums including magnet-optic disks, various write-once optical disks and the like. The structure of the medium is not critical.

## Claims

1.  An optical information recording medium of the type which comprises a substrate and a recording layer formed on the substrate and capable of recording, reproducing or erasing information by optical irradiation, the substrate comprising an injection molded piece of a polycarbonate resin that is prepared from an aromatic bisphenol and phosgene and the amount of chlorine present as a chloroformate group at terminal ends of the polycarbonate is not greater than 2.0 ppm, the substrate includes a content of free chlorine of less than or equal to 0.2 ppm and a content of halogenated hydrocarbons of less than or equal to 10 ppm.

## Patentansprüche

1.  Optisches Informationsaufzeichnungsmedium des Typs, welcher ein Substrat und eine auf dem Substrat gebildete Aufzeichnungsschicht umfaßt und zur Aufzeichnung, Reproduktion oder Löschung von Informationen durch optische Bestrahlung in der Lage ist, wobei das Substrat ein spritzgegossenes Teil aus einem Polycarbonatharz ist, das aus einem aromatischen Bisphenol und Phosgen hergestellt worden ist, wobei die Menge des als Chlorformiatgruppe an terminalen Enden des Polycarbonats vorliegenden Chlors nicht größer als 2,0 ppm ist, und wobei das Substrat einen Gehalt an freiem Chlor von weniger als oder gleich 0,2 ppm und einen Gehalt an halogenierten Kohlenwasserstoffen von weniger als oder gleich 10 ppm beinhaltet.

## Revendications

1. Support d'enregistrement optique du type comprenant un substrat et une couche d'enregistrement formée sur le substrat et capable d'enregistrer, de reproduire ou d'effacer une information à l'aide d'un rayonnement optique, le substrat comprenant une pièce moulée par injection en résine de polycarbonate, préparée à partir d'un bisphénol aromatique et de phosgène et dans lequel la quantité de chlore présent sous forme de groupement chloroformiate aux extrémités terminales du polycarbonate est inférieure ou égale à 2,0ppm, le substrat comprend une quantité de chlore libre inférieure ou égale à 0,2 ppm et une quantité d'hydrocarbures halogénés inférieure ou égale à 10 ppm.

# FIG. 1

# FIG. 2

# FIG. 3

Error rate ratio

2.0ppm

0.8ppm

0.2ppm

100

10

1

0

1000    2000    3000

Preservation time (hours)

# FIG. 4

Error rate ratio to initial value

C
D
B
A

100

10

1000    2000    3000

Preservation time (hours)

12

# FIG. 5

# FIG. 6

## FIG. 7

## FIG. 8